# EUROPEAN PATENT APPLICATION

(11) **EP 4 618 503 A1**
(43) Date of publication of application: **17.09.2025**
(21) Application number: 23887511.6
(22) Date of filing: 30.06.2023
(51) Int. Cl.: H04L 45/12

(54) **DATA TRANSMISSION PROCESSING METHOD AND DEVICE, STORAGE MEDIUM, AND ELECTRONIC DEVICE**

(30) Priority: 08.11.2022 CN 202211392690
(71) Applicant: ZTE CORPORATION, Shenzhen, Guangdong 518057 (CN)
(72) Inventor: LI, Jun, Shenzhen, Guangdong 518057 (CN); LIU, Zhilong, Shenzhen, Guangdong 518057 (CN); ZHU, Shizheng, Shenzhen, Guangdong 518057 (CN); GUO, Chengfeng, Shenzhen, Guangdong 518057 (CN); CHEN, Junjiang, Shenzhen, Guangdong 518057 (CN)
(74) Representative: Carangelo, Pierluigi
(86) International application number: PCT/CN2023/105181
(87) International publication number: WO 2024/098815

(57) **Abstract**

Embodiments of the present disclosure provide a data transmission processing method and device, storage medium, and electronic device. The method comprises: receiving transmission quality information and a network card state reported by a originating client; obtaining a data transmission path between the originating client and a destination client, and obtaining an edge load of an edge node accessed by the originating client and the destination client; determining a multipath transmission policy of the originating client according to the transmission quality information, the network card state, and the edge load; and sending the multipath transmission policy and the data transmission path to the originating client, so that the originating client performs data transmission based on the multipath transmission policy and the data transmission path can solve the problems in the related art that a static scheme is adopted for data multi-path transmission and a single point risk exists due to a poor multi-path transmission effect, and a corresponding transmission scheme is formulated for different levels of data; in a transmission process, a multi-path transmission policy is dynamically adjusted according to a transmission quality parameter, a network adapter state, and an edge load, thereby reducing a single point risk.

## Description

### Cross-Reference to Related Disclosure

This disclosure is based on Chinese Patent Disclosure CN 202211392690.0 filed on Nov. 8, 2022 and entitled "Data Transmission Processing Method and Device, Storage Medium and Electronic Device", and claiming priority of this patent disclosure, the disclosure of which is incorporated herein by reference in its entirety.

### Technical Field

Embodiments of the present disclosure relate to the field of communications, and in particular, to a data transmission processing method and device, a storage medium, and an electronic device.

### Background

With the continuous development of the Internet, audio and video media data has become a main body of Internet traffic. In recent years, the development of scenes such as AR/VR, cloud game, interactive live broadcast, cloud computer, remote education, video conference, video surveillance, and various OTT applications also promotes a real time audio and video transmission (Real Time Communication, referred to as RTC) technology to become a hot field in domestic and external RTCs, and the industrial scale of domestic and external RTCs keeps a relatively high growth speed. In addition, new challenges are proposed for the real-time, stable, large-capacity and low-cost audio and video transmission. Some manufacturers propose a multi-path transmission method in order to improve the quality of audio and video transmission in the construction process of an RTN for an audio and video transmission network.

In a current RTN system multi-path solution, a static solution is adopted for data multi-path transmission, that is, it is determined whether to start a multi-path and multi-path transmission policy when the data is transmitted. It is impossible to dynamically adjust the multi-path transmission strategy and scheme according to the factors such as the transmission quality parameter and the network signal status during the transmission. As a result, the transmission policy cannot adapt to the change of the transmission network in the transmission process, which causes the problem of excessive redundancy of the transmission data or poor transmission quality.

The reliability of the multi-path transmission solution in the current RTN system is not high enough, and a single point risk easily occurs.

For the problem in the related art that a static scheme is adopted for data multi-path transmission and the multi-path transmission has a poor effect and a single point risk exists, no solution has been proposed.

### Summary

Embodiments of the present disclosure provide a data transmission processing method and device, a storage medium, and an electronic device, so as to at least solve the problems in the related art that a static scheme is adopted for data multi-path transmission and the multi-path transmission has a poor effect and a single point risk exists.

According to one embodiment of the present disclosure, provided is a data transmission processing method, which is applied to a multipath control center. The method includes:
receiving transmission quality information and a network card state reported by a originating client;
obtaining a data transmission path between the originating client and a destination client, and obtaining an edge load of an edge node accessed by the originating client and the destination client;
determining a multipath transmission policy of the originating client according to the transmission quality information, the network card state, and the edge load; and
sending the multipath transmission policy and the data transmission path to the originating client, so that the originating client performs data transmission based on the multipath transmission policy and the data transmission path.

According to another embodiment of the present disclosure, a data transmission processing device is also provided. The device includes:
a receiving module, configured to receive transmission quality information and a network card state reported by a originating client;
an acquisition module, configured to obtain a data transmission path between the originating client and a destination client, and obtaining an edge load of an edge node accessed by the originating client and the destination client;
a first determination module, configured to determine a multipath transmission policy of the originating client according to the transmission quality information, the network card state, and the edge load; and
a sending module, configured to send the multipath transmission policy and the data transmission path to the originating client, so that the originating client performs data transmission based on the multipath transmission policy and the data transmission path.

According to another embodiment of the present disclosure, also provided is an electronic device, including a memory and a processor, wherein the memory stores a computer program, and the processor is configured to run the computer program so as to execute the steps in any one of the method embodiments.

### Brief Description of the Drawings

Fig. 1 is a hardware structure block diagram of a device for the data transmission processing method according to an embodiment of the present disclosure;
Fig. 2 is a flowchart of a data transmission processing method according to an embodiment of the present disclosure;
Fig. 3 is a flowchart of a data transmission processing method according to an optional embodiment of the present disclosure;
Fig. 4 is a schematic composition diagram of an RTN system with high reliability of a path according to an embodiment of the present disclosure;
Fig. 5 is a block diagram of a client in a multipath highly reliable (RTN) system according to an embodiment of the disclosure;
Fig. 6 is a schematic diagram of a format of a packaged data packet according to an embodiment of the present disclosure;
Fig. 7 is a diagram of multi-path in accordance with an embodiment;
Fig. 8 is a block diagram of an edge node in a multipath highly reliable (RTN) system according to an embodiment of the disclosure;
Fig. 9 is a composition block diagram of a relay node according to an embodiment of the present disclosure;
Fig. 10 is a composition block diagram of a route dispatch center according to an embodiment of the present disclosure;
Fig. 11 is a constitutional block diagram of a multipath control center according to an embodiment of the present disclosure;
Fig. 12 is a schematic diagram of a multi-path intelligent decision model according to an embodiment of the present disclosure;
Fig. 13 is a schematic diagram of a single edge transmission and a multi-edge transmission according to an embodiment of the present disclosure;
Fig. 14 is a flowchart of multi-path intelligent decision making according to an embodiment of the present disclosure;
Fig. 15 is a block diagram of a data transmission processing device according to an embodiment of the present disclosure.

### Detailed Description of the Embodiments

Embodiments of the present disclosure will be described below in detail with reference to the accompanying drawings and in conjunction with embodiments.

It should be noted that, terms such as 'first' and 'second' in the description, claims, and accompanying drawings of the present disclosure are used to distinguish similar objects, but are not necessarily used to describe a specific sequence or order.

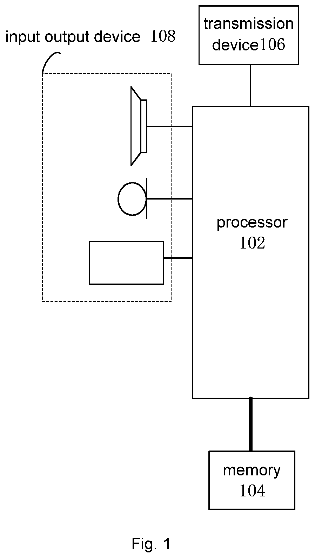

The method embodiments provided in the embodiments of the present disclosure can be executed in a device or a similar arithmetic device. Taking running on a device as an embodiment, Fig. 1 is a hardware structure block diagram of a device for the data transmission processing method according to an embodiment of the present disclosure, as shown in Fig. 1, the device may include one or more (only one is shown in Fig. 1) processors 102 (the processors 102 may include but are not limited to a processing device such as a microprocessor MCU or a programmable logic device FPGA) and a memory 104 configured to store data, the device can further include a transmission device 106 and an input/output device 108 for communication functions. A person of ordinary skill in the art may understand that the structure shown in Fig. 1 is merely exemplary, which does not limit the structure of the foregoing device. For example, the device may also include more or fewer components than shown in Fig. 1, or have a different configuration than that shown in Fig. 1.

The memory 104 may be configured to store a computer program, for example, a software program and a module of application software, such as a computer program corresponding to the data transmission processing method in the embodiments of the present disclosure. The processor 102 runs the computer program stored in the memory 104, so as to execute various function applications and service chain address pool slice processing, that is, to implement the foregoing method. Memory 104 may include high-speed random access memory, and may also include non-volatile memory, such as one or more magnetic storage devices, flash memory, or other non-volatile solid-state memory. In some embodiments, memory 104 may further include memory remotely located with respect to processor 102, which may be connected to the device over a network. Embodiments of such networks include, but are not limited to, the Internet, intranets, local area networks, mobile communication networks, and combinations thereof.

The transmission device 106 is used to receive or transmit data via a network. Specific embodiments of the network described above may include a wireless network provided by a communication provider of the device. In one embodiment, the transmission device 106 may include a network interface controller (NIC) that is coupled to other network devices via a base station to communicate with the Internet. In one embodiment, the transmission device 106 may be a radio frequency (RF) module for communicating wirelessly with the Internet.

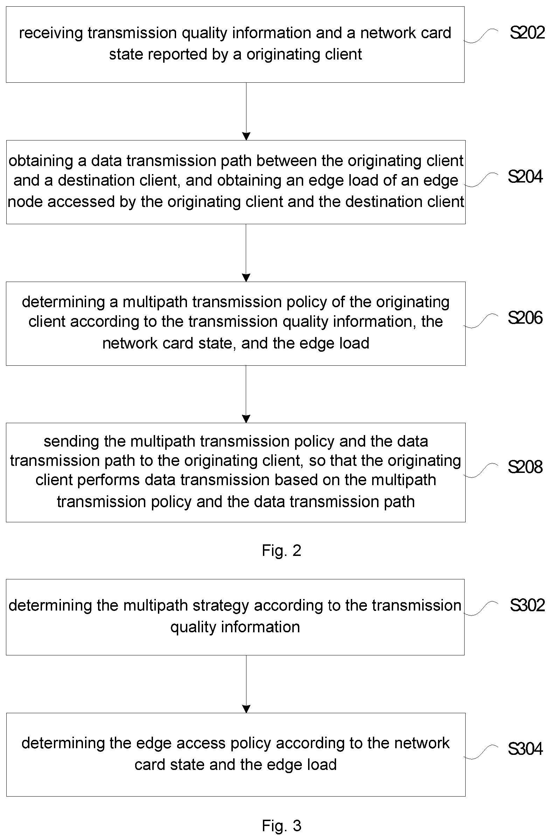

The present embodiment provides a data transmission processing method running on the described device. Fig. 2 is a flowchart of a data transmission processing method according to an embodiment of the present disclosure. As shown in Fig. 2, the method is applied to a multipath control center. The flow includes the following Steps:
S202, receiving transmission quality information and a network card state reported by a originating client;
S204, obtaining a data transmission path between the originating client and a destination client, and obtaining an edge load of an edge node accessed by the originating client and the destination client;

In this embodiment, the S204 may specifically include: obtaining the data transmission path between the originating client and the destination client that is synchronized by a routing dispatch center, and the edge load of the edge node accessed by the originating client and the destination client, wherein the data transmission path is obtained by the routing dispatch center by performing path planning according to a topological relationship among clients, edge nodes and transit nodes, link data between clients and accessed edge nodes, link data between the edge nodes and a connected nodes and link data between transit nodes, wherein the clients comprise the originating client and the destination client.

S206, determining a multipath transmission policy of the originating client according to the transmission quality information, the network card state, and the edge load;

S208, sending the multipath transmission policy and the data transmission path to the originating client, so that the originating client performs data transmission based on the multipath transmission policy and the data transmission path.

By means of S202 to S208, the problems in the related art that a static scheme is adopted for data multipath transmission and the multipath transmission has a poor effect and a single point risk exists can be solved, and corresponding transmission schemes are formulated for different levels of data; in a transmission process, a multi-path transmission policy is dynamically adjusted according to a transmission quality parameter, a network card state and an edge load, and a client performs data transmission with a data transmission path based on the multi-path transmission policy, thereby reducing a single point risk.

Fig. 3 is a flowchart of a data transmission processing method according to an optional embodiment of the present disclosure. As shown in Fig. 3, S206 may specifically include:
S302, the multipath transmission policy comprises a multipath strategy and an edge access strategy for transmitting data, determining the multipath strategy according to the transmission quality information;
S304: determining the edge access policy according to the network card state and the edge load.

In an embodiment, S302 may specifically include:
S3021, determining transmission quality of the originating client according to the transmission quality information, and further, the transmission quality information comprises a packet loss rate, a latency, a jitter, a frame freeze rate, a screen distortion rate and/or a network card signal strength, normalizing the packet loss rate, the latency, the jitter, the frame freeze rate, the screen distortion rate and the network card signal strength; comparing the packet loss rate, the latency, the jitter, the frame freeze rate, the screen distortion rate and/or the network card signal strength with a corresponding preset interval to obtain a comparison result; and determining the transmission quality according to the comparison result and a trend of change of index.
S3022: determining a level of the transmission quality;
S3023: determining the multipath policy according to the level of the transmission quality; furthermore, in a case where the transmission quality is of a first level, determining that the multipath policy is a single path mode; in a case where the transmission quality is of a second level, determining that the multipath policy is a low cost redundancy mode; in a case where the transmission quality is of a third level, determining that the multipath policy is a full redundancy mode; wherein the multipath policy comprises the full redundancy mode, the low cost redundancy mode, and the single path mode, wherein in the full redundancy mode, all data is duplicated and transmitted on two paths; in the low cost redundancy mode, a part of data is transmitted on two paths; in the single path mode, all data is transmitted using one path; the transmission quality of the first level is greater than the transmission quality of the second level, and the transmission quality of the second level is greater than the transmission quality of the third level.

In another embodiment, S304 may specifically include: the edge access policy comprises single edge access and multi edge access; determining whether a number of physical network cards started on the originating client is one or multiple based on the network card state; in a case where the starting number of the physical network card for the originating client is one and the edge load of the edge node accessed by the originating client meets a preset requirement, determining that the edge access policy is the single edge access; in a case where the starting number of the physical network card of the originating client is one and the edge load of the edge node accessed by the originating client does not meet the preset requirement, determining that the edge access policy is the multi edge access; in a case where the starting number of the physical network card of the originating client is multiple and the edge load of the edge node accessed by the originating client meets the preset requirement, determining that the edge access policy is the single edge access; in a case where the starting number of the physical network card of the originating client is multiple and the edge load of the edge node accessed by the originating client does not meet the preset requirement, determining that the edge access policy is the single edge access.

In an optional embodiment, the method further includes: determining a transmission priority according to a service priority reported by the originating client; and sending the transmission priority to the originating client, so that the originating client performs data transmission based on the multi path transmission policy, the data transmission path, and the transmission priority.

This embodiment is applicable to the industries related to real-time audio/video communication, such as AR/VR, cloud game, interactive live broadcast, cloud computer, remote education, video conference, video monitoring, and various OTT applications.

In this embodiment, for a lack of a unified multipath control center in a multi-transmission solution of a current RTN system, a corresponding transmission solution is formulated for different data, and a corresponding transmission solution is formulated for different service level data; a multi-path transmission policy cannot be dynamically adjusted in a transmission process according to factors such as a transmission quality parameter and a network card signal state; the problem of single point risk exists. Provided are a multipath highly reliable audio and video transmission (RTN) system and method, which ensure the quality of multipath transmission while keeping the cost optimal, and formulate a corresponding transmission mode according to the service priority; dynamically adjusting a transmission strategy according to transmission quality during a transmission process; at the same time, the single-point transmission risk is also solved. The reliability of the transmission of the RTN system is improved, and a lower transmission cost is controlled at the same time, so that the utilization value of the RTN transmission resource is maximized.

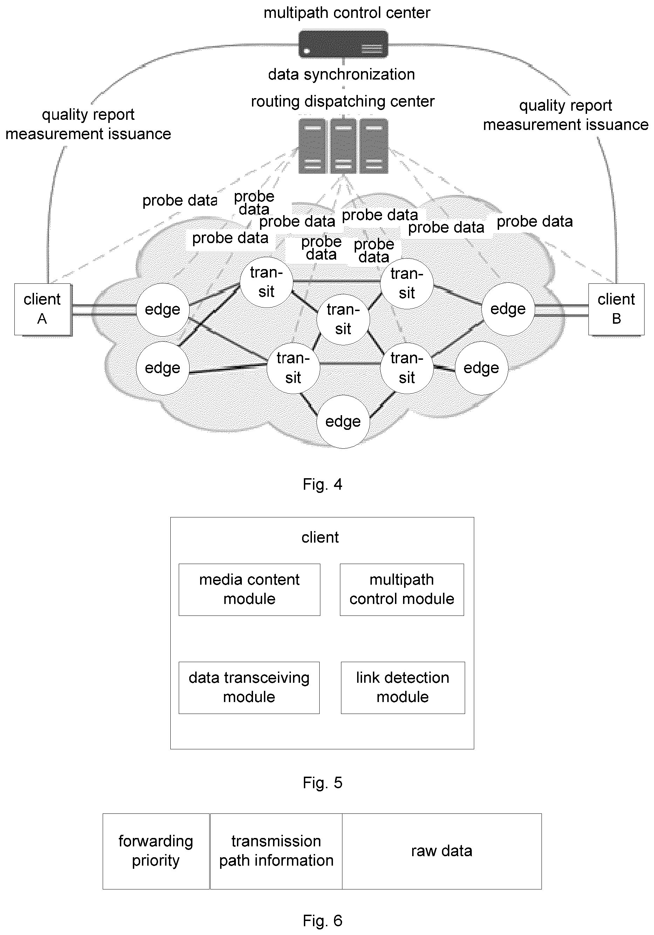

Fig. 4 is a schematic composition diagram of an RTN system with high reliability of a path according to an embodiment of the present disclosure, as shown in Fig. 4. The system mainly includes the client, the edge node, the transit node, the routing dispatching center and the multipath control center.

The client is an audio/video terminal or a related SDK, and is mainly responsible for processing an audio/video service, including accessing to an edge node and receiving and sending audio/video data, and is also responsible for detecting the link quality between the client and the edge node and reporting same to the routing dispatching center, and the control of the multi-path transmission strategy and the processing of the multi-path data transmission by the client. It also takes charge of reporting the quality information (packet loss rate, delay data, jitter data, picture capture rate, screen capturing rate) and the network card state (whether to enable or not, signal strength) in the data transmission process to the multipath control center. The client types uniformly cover an audio/video media display part and an audio/video media generation part, for example, a conference terminal containing a PC client, a mobile phone client and a conference room in a video conference scenario; a cloud desktop scenario includes a thin terminal, a PC end and a back-end server; the AR/VR scenario includes VR glasses, a head-mounted terminal, and a background server.

The edge node is responsible for the access of a client, and has a data transceiving capability; at the same time, it is also responsible for receiving a data detection request from the routing dispatching center, and detecting network parameters of a client connected thereto and a transit node, in which the detection data contains packet loss, delay, jitter, available bandwidth, node load, etc., and reporting a detection result to the routing dispatching center.

The transit node is responsible for receiving data and forwarding data according to transmission path information and in combination with priority information, and is also responsible for receiving a data detection request from the routing dispatching center, and detecting network parameters of the transit node and an edge node connected thereto, wherein the detection data contains packet loss, delay, jitter, available bandwidth, node load, etc., and is responsible for reporting a detection result to the routing dispatching center.

The routing dispatching center is responsible for managing the overall network topology, issuing a link detection request to a client, an edge node and a transit node, collecting link network parameter data reported by the client, the edge node and the transfer node, converting a specific link parameter into a specific link quality index, uniformly planning a data transmission path according to the link quality parameter and the network topology, and also responsible for synchronizing an optimal path generated by planning to the multipath control center, the multipath control center processes and distributes the packets uniformly.

The multipath control center is responsible for collecting quality information about the client in a data transmission process, a network card state in combination with a priority condition of a service, an edge load condition and path information intelligent decision on a multi-path transmission policy of the client, and issuing a relevant transmission policy to the client for execution.

Components and functions of each part are described in detail below.

Fig. 5 is a block diagram of a client in a multi-path highly reliable RTN system according to an embodiment of the present disclosure. As shown in Fig. 5, the client mainly includes a media content module, a multipath control module, a data transceiving module and a link probing module.

The media content module is responsible for processing related services such as producing/displaying audio and video media.

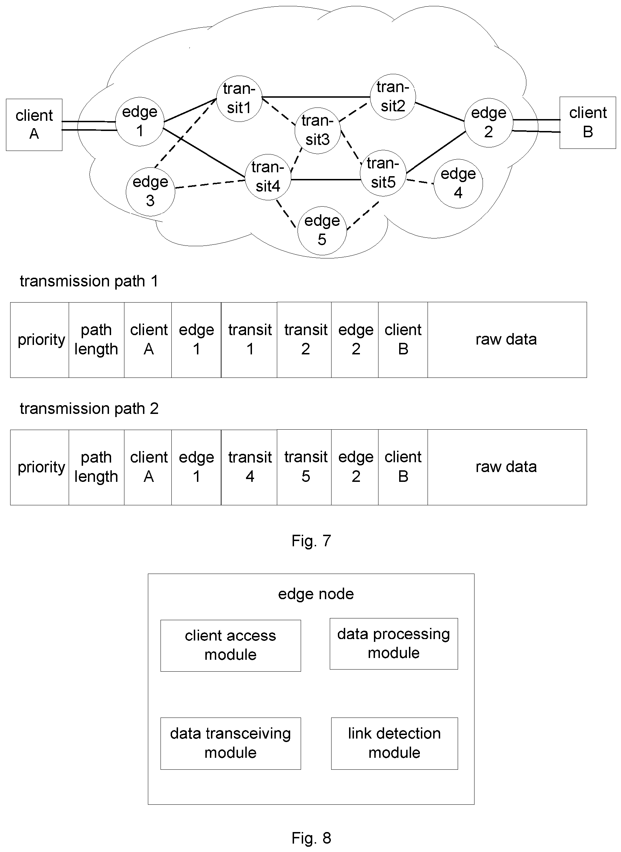

The multipath control module is responsible for reporting the quality information (packet loss rate, delay data, jitter data, picture capture rate, screen capturing rate) and the network card state (whether to enable or not, and the signal strength) in the data transmission process to the multipath control center, receiving a multi-path control policy of a multipath control center, and encapsulating original data into a new data packet according to the policy, Fig. 6 is a schematic diagram of a format of an encapsulated data packet according to an embodiment of the present disclosure. As shown in Fig. 6, the detailed multipath strategy can refer to the relevant description of the multi-path intelligent scheduling module of the multipath control center. Fig. 7 is a schematic diagram of a multi-path according to the present embodiment. As shown in Fig. 7, the multi-path scheduling module in the multipath control center determines the transmission path. For the same original number that needs to be transmitted on the two links, new data packets that have been encapsulated are shown in the transmission path 1 and the transmission path 2 in Fig. 7. Specific node information in the path includes an IP address and port information.

The data transceiving module is responsible for receiving data, and at the same time, also has the function of sending encapsulated data to a next hop according to path information indicated in a transmission path and according to priority information requirements, in which data with a high priority is preferentially sent, and a specific data transmission mode is determined according to a multipath strategy.

The link detection module is responsible for registering to the detection management of the routing dispatch center and receiving a detection request instruction issued thereby, the instruction will include a specific node needing to be detected, and link detection is performed immediately after the instruction is received, wherein the detection indexes include packet loss, delay, jitter, available bandwidth, node load and load, etc., after the detection is completed, the detection parameters are sent to the detection management module of the routing center periodically.

Fig. 8 is a block diagram of an edge node in a multi-path highly reliable RTN system according to an embodiment of the present disclosure, and as shown in Fig. 8, the edge node is mainly composed of a client access module, a data processing module, a data transceiving module and a link detection module.

The client access module is responsible for accepting an access request from a client and transmitting data with the client.

The data processing module is responsible for decapsulating the encapsulated data, then removing the information of the current node in the path and updating the path length field, exposing the information of the next node in the path so that the data can be quickly forwarded in the path, and then encapsulating the data.

The data transceiving module is responsible for forwarding the encapsulated data packets to the transit node according to the requirements of the transmission path, wherein the data with a higher priority is forwarded preferentially.

The link detection module is responsible for registering with a detection management module of a scheduling center and receiving a detection request instruction, in which the instruction may contain a specific forwarding node requiring an edge node to be detected; after receiving the instruction, link detection is performed immediately, in which a detection index contains packet loss, delay, jitter, an available bandwidth, a node load, etc.; and after detection is completed, specific parameters of the detection are regularly sent to a detection management module of a routing scheduling center.

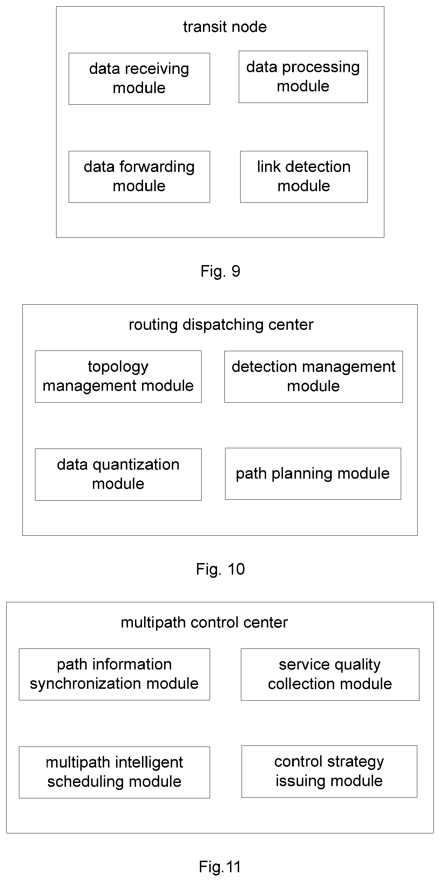

Fig. 9 is a composition block diagram of a relay node according to an embodiment of the present disclosure. As shown in Fig. 9, in an RTN system with high reliability of multipath, the relay node is mainly composed of a data receiving module, a data processing module, a data forwarding module and a link detection module.

The data receiving module is responsible for receiving data from the edge node or other transit nodes with high performance, and delivering the data to the data processing module for processing.

The data processing module is responsible for decapsulating the encapsulated data, then removing the information of the current node in the path and updating the path length field, exposing the information of the next node in the path so that the data can be quickly forwarded in the path, and then encapsulating the data.

The data forwarding module is responsible for forwarding the encapsulated data packet to the transit node according to the requirements of the transmission path, wherein the data with higher priority is forwarded preferentially.

The link detection module is responsible for registering with a detection management module of the scheduling center and receiving a detection request instruction, the instruction may include a specific node (including a forwarding node and other edge nodes) that needs to be detected by the edge node, performing link detection immediately after receiving an instruction, wherein a detection index includes packet loss, a delay, a jitter, an available bandwidth, a node load, etc., after the detection is completed, the detected specific parameters are periodically sent to the detection management module of the scheduling center.

Fig. 10 is a composition block diagram of a route dispatching center according to an embodiment of the present disclosure. As shown in Fig. 10, the route dispatching center in the multi-path highly reliable RTN system of this embodiment is mainly composed of a topology management module, a detection management module, a data quantization module and a path planning module.

The topology management module is responsible for the management of topology relationships of the whole RTN network, and includes operations of adding and deleting an edge node and a transit node, and operations of changing connection relationships between nodes.

The detection management module is responsible for issuing a detection request to the client, the edge node and the transit node, and receiving detection data of the client, the edge node and the transit node.

The data quantizing module quantizes the received information such as packet loss, delay, jitter, available bandwidth, and node load to obtain the quality index of the corresponding link.

A path planning module is responsible for planning a path in real time according to a topological relationship among a client, an edge node and a transit node in conjunction with a quality index of a link, two transmission paths are planned from a same group of starting point and end point, and the transmission paths planned in real time are stored in a memory and synchronized to a multipath control center.

Fig. 11 is a composition block diagram of a multipath control center according to an embodiment of the present disclosure. As shown in Fig. 11, in the multipath highly reliable RTN system of this embodiment, the multipath control center is mainly composed of a path information synchronization module, a service quality collection module, a multipath intelligent scheduling module and a control strategy issuing module.

The path information synchronization module is responsible for synchronizing information about a path calculated in real time from the path planning module of the routing dispatch center, and the path information is used for the decision made by the multi-path intelligent scheduling module.

The quality of service collection module is responsible for collecting quality information (packet loss rate, latency, jitter, frame freeze rate, screen distortion rate) and network card state (whether to enable or not, and signal strength) information in the data transmission process reported by the client.

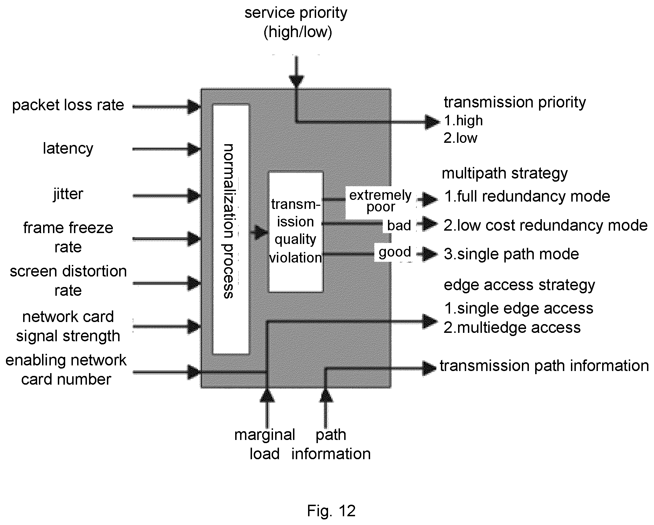

Fig. 12 is a schematic diagram of a multi-path intelligent decision model according to an embodiment of the present disclosure, the multi-path intelligent scheduling module is responsible for comprehensively deciding a multi-path transmission strategy by combining information, such as a packet loss rate, a delay, a jitter, a picture click-through rate, a screen recall rate, the number of network cards enabled and the signal strength of the network cards, collected by the service quality module, and combining service priority, edge load and path information, Specifically, the information includes a transmission priority, a multi-path policy, an edge access policy, and transmission path information.

The transmission priority is determined according to the service priority, and is divided into two priority levels: high priority level and low priority level. Generally, the service associated with a VIP user or a payer user has a high priority level, while the service associated with other users has a low priority level.

The multi-path strategy is classified into full redundancy mode, low cost redundancy mode, and single path mode. a full redundancy mode expresses that all data is copied and transmitted on two paths, which is applicable to a situation in which network quality is extremely poor; a low-cost redundancy mode indicates that part of data is transmitted on two paths, and part of data is transmitted on one path, which is suitable for a scenario with poor link quality. For example, in an audio and video scenario, signaling, non-media data, audio data, and video redundant data are copied and transmitted on two paths, and original video data is transmitted on a single path; a single path means that one path is used for transmission, and is generally used in a scenario with better link quality. in a multi-path intelligent decision model, firstly, performing normalization processing on a packet loss rate, a delay, a jitter, a picture click rate, a fuzzy screen rate and a network card signal strength (converting an indicator into an interval 0-1), and comparing various indexes with pre-set intervals (e.g. three intervals of 0-0.5, 0.5-8 and 0.8-1, and representing good, medium and poor quality in tables), In combination with the change trend of the index, the current transmission quality is determined comprehensively, and the specific transmission quality is classified into three grades: good, bad and extremely bad. Different levels correspond to different multi-path strategies.

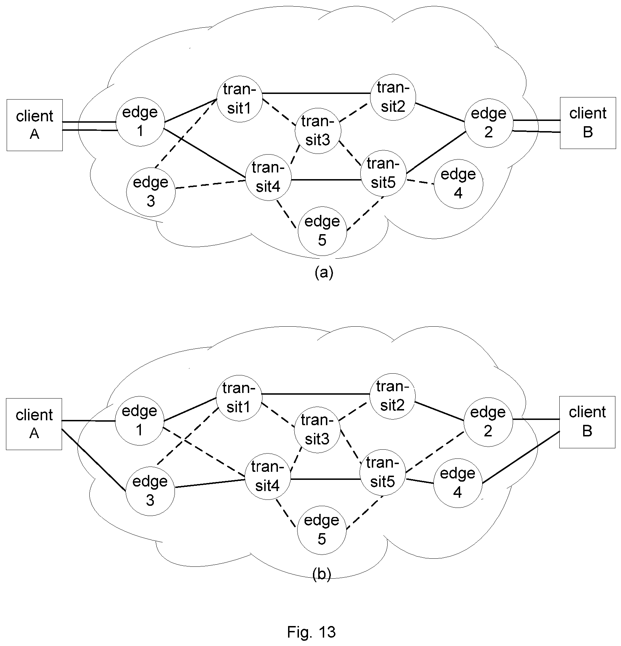

Fig. 13 is a schematic diagram of single-edge transmission and multi-edge transmission according to an embodiment of the present disclosure. As shown in Fig. 13, an edge access policy is determined according to an enabled network card book and edge load information, and a single-edge access mode indicates that a client accesses an edge for transmission. As shown in Fig. 13-a, the present disclosure is applicable to a scenario where an edge resource is idle and a quality of a link connected to the edge is good. The multi-edge access mode indicates that the client accesses two edges for transmission. As shown in figure 13-b, the multi-edge access mode is applicable to a scenario where an edge resource is insufficient and a link connected to a client and a single edge has poor quality, and the multi-edge access solves a single-point edge risk, thereby improving the reliability of an entire RTN system.

The control strategy delivering module delivers the multi-path strategy decided by the path intelligent scheduling module to the client multi-path control module for execution.

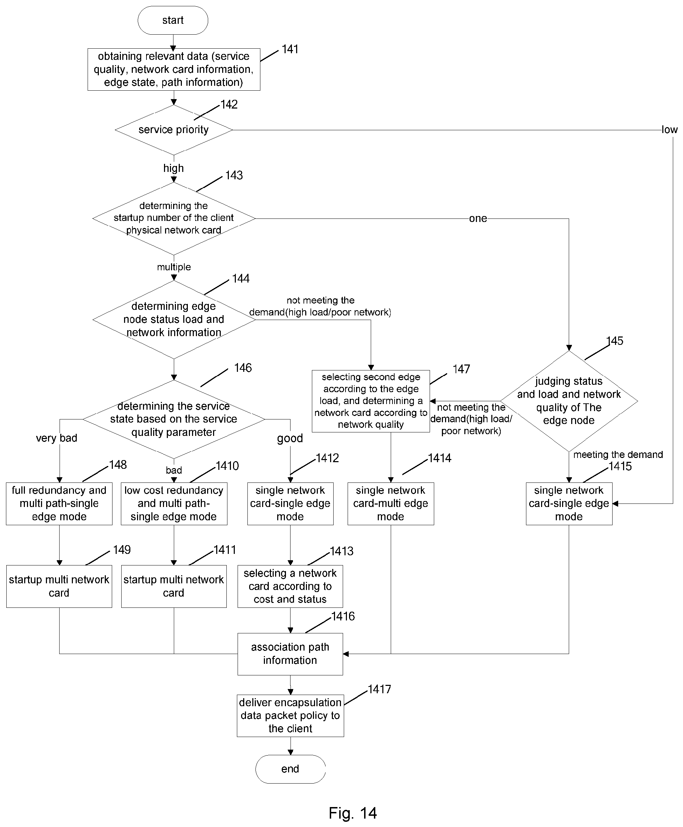

Fig. 14 is a flowchart of a multi-path intelligent decision making method according to an embodiment of the present disclosure. As shown in Fig. 14, the method includes:
S141, obtaining relevant data (service quality, network card information, edge state, path information);
S142, judging the service priority, in the case where the result is that the service priority is high, executing S143, otherwise, executing S145;
S143, judging the number of physical network cards activated on the client side; in the case where the result is multiple, executing S144; if the result is one, executing S145;
S144, judging the state load of the edge node and the network quality, in the case where the result is that requirements are satisfied, executing S146, and in the case where the result is that requirements are not satisfied, executing S147;
S145, judging the state load of an edge node and the network quality, in the case where the result is that requirements are satisfied, executing S141, and in the case where the result is that requirements are not satisfied, executing S147;
S146, judging a service state according to the service quality parameter, in the case where the result is very poor, executing S148-S149, in the case where the result is poor, executing S1410-S1411, and in the case where the result is good, executing S1412-S1413;
S147, selecting a second edge according to the edge load, and determining a network card to be used according to the network quality, and then executing S1414;
S148-S149, determining the full redundancy and multi path-single edge mode, and starting a multi-network card;
S1410-S1411, determining the low cost redundancy and multi path-single edge mode, and starting the multi network card;
S1412-S1413, determining the single network card-single edge mode, and selecting the network card according to cost and state;
S1414, determining the single-network-card multi-edge mode;
S1415, determining the single network card-single edge mode;
S1416-S1417, in combination with the path information, the policy is delivered to the client to encapsulate the data packet.

The flow of a multi-path highly reliable RTN system proposed in this embodiment is as follows:
Step 1, a client, an edge node and a transit node register to a topology management module of a routing dispatch center;
Step 2, after the registration is completed, the topology management module of the routing dispatch center stores the client, the edge node and the transit node in the RTN system configured by the user and the link relationship there between.
Step 3, after the topology relationship configuration is completed, a detection management module of a routing dispatch center issuing information about an edge node which can be accessed by a client to the client; issuing node information about a node connected to the present node to each edge node and transit node, and instructing same to start detection;
Step 4, after receiving a detection request from a routing dispatch center, a link detection module of a client, an edge node and a transit node immediately starting a detection request for a link network parameter, and regularly reporting a detection result to a path planning module of the routing dispatch center;
Step 5, a path planning module of the routing scheduling center performs path planning according to a topological relationship and real-time detection data of the client, the edge node and the transit node, and plans two transmission paths for each group of a starting node and a destination node, wherein the transmission paths planned in real time are stored in a memory and are synchronized together with edge load information to a path information synchronization module of the multipath control center.
Step 6, the client multi-path control module reports the quality information (packet loss rate, delay data, jitter data, picture capture rate, screen occupancy rate) and the network card state (whether to enable or not, signal strength) during the data transmission process to the service quality collection module of the multipath control center in real time.
Step 7, a multi-path intelligent scheduling module of a multipath control center comprehensively decides a multi-path transmission strategy by combining information, such as a packet loss rate, a delay, a jitter, a picture bearing rate, a fuzzy screen rate, the number of network cards activated and the strength of network card signals, collected by a service quality module, and combining a service priority, an edge load and path information, in which the multi-path transmission strategy specifically includes a transmission priority, a multi-path strategy, an edge access strategy and transmission path information.
Step 8, the control strategy delivering module of the multipath control center delivers the decided multi-path transmission strategy to the client.
Step 9, when the service request starts, the client multi-path control module encapsulates the original data in combination with the multi-path transmission strategy, the transmission priority and the transmission path. Then, the transceiver module of the client sends the encapsulated data to the next-hop edge node.
Step 10, after receiving the encapsulated data, the edge node and the transit node de-capsulate the encapsulated data, then remove the information of the present node in the path and update the path length field, expose the information of the next node in the path so as to quickly forward the data in the path, and then encapsulate the data. The message is forwarded to the transit node, preferentially sending data with a high priority.
Step 11, after receiving the encapsulated data, the destination edge node decapsulates the encapsulated data to obtain the address of the destination client, and then sends the original data to the destination client.

So far, the process of transmitting the data in the RTN system through the multi-path is completed.

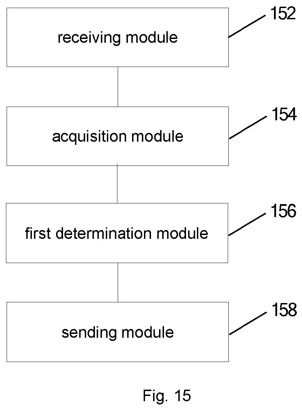

According to another aspect of the present embodiment, a data transmission processing device is further provided. Fig. 15 is a block diagram of a data transmission processing device according to an embodiment of the present disclosure, and as shown in Fig. 15, the device is applied to a multipath control center. The device includes:
A receiving module 152, configured to receive transmission quality information and a network card state reported by a starting client;
An acquisition module 154, configured to obtain a data transmission path between the start client and a destination client, and obtain an edge load of an edge node accessed by the start client and the destination client;
A first determination module 156, configured to determine a multi-path transmission policy of the initiating client according to the transmission quality information, the network adapter state, and the edge load;
And a sending module 158, configured to send the multi-path transmission policy and the data transmission path to the initiator client, so that the initiator client performs data transmission with the data transmission path based on the multi-path transmission policy.

In an embodiment, the first determination module 156 includes:
A first determination sub-module, configured to determine, according to the transmission quality information, the multi-path policy, wherein the multi-path transmission policy includes a multi-path policy for transmitting data and an edge access policy;
A second determining sub-module, configured to determine the edge access policy according to the network adapter state and the edge load.

In one embodiment, the first determining submodule includes:
A first determining unit, configured to determine transmission quality of the start client according to the transmission quality information;
A second determining unit, configured to determine a level of the transmission quality;
A third determining unit, configured to determine the multi-path policy according to the level of the transmission quality.

In an embodiment, the first determination unit is further configured to transmit the quality information including a packet loss rate, a delay, a jitter, a picture click-through rate, a screen recall rate, and a network card signal strength, and normalize the packet loss rate, the delay, the jitter, the picture click-through rate, the screen recall rate, and the network card signal strength;
comparing the normalized packet loss ratio, delay, dithering, image capture rate, screen occupancy rate, and network card signal strength with a pre-set interval to obtain a comparison result;
determining the transmission quality according to the comparison result and the indicator change trend.

In an embodiment, the third determination unit is further configured to, in a case that the transmission quality is a first level, determine that the multi-path policy is a single-path mode;
determining that the multipath policy is a low cost redundancy mode on a condition that the transmission quality is a second level;
on a condition that the transmission quality is of a third level, determining that the multi-path policy is a full redundancy mode;
wherein the multipath policy includes the full redundancy mode, the low cost redundancy mode, the single path mode, wherein the full redundancy mode indicates that all data is duplicated and transmitted on two paths, and the low-cost redundancy mode indicates that some data is transmitted on two paths, the single-path mode indicates that all data is transmitted by using one path, and transmission quality of a first level is greater than transmission quality of a second level, the transmission quality of the second level is greater than the transmission quality of the third level.

In one embodiment, the second determination sub-module is further configured to set the edge access strategy to include single-edge access and multi-edge access;
determining, according to the network adapter state, that the number of start-ups of the physical network adapter of the originating client is one or more;
in a case that the start number of the physical network interface cards of the initiating client is one and an edge load of an edge node accessed by the initiating client meets a preset requirement, determining that the edge access policy is single-edge access;
in a case that the start number of the physical network interface cards of the initiating client is one and an edge load of an edge node accessed by the initiating client does not meet a preset requirement, determining that the edge access policy is the multi-edge access;
when the number of start times of the physical network interface cards of the initiating client is multiple and an edge load of an edge node accessed by the initiating client satisfies a pre-set requirement, determining that the edge access policy is single-edge access;

And in a case that the start number of the physical network interface cards of the originating client is multiple and the edge load of the edge node accessed by the originating client does not meet the preset requirement, determining that the edge access policy is the multi-edge access.

In one embodiment, the acquisition module is further configured to acquire a data transmission path between the source client and the destination client that are synchronized by a routing dispatch center, an edge load of the start client and an edge node accessed by the destination client, wherein the data transmission path is obtained by the routing dispatch center performing path planning according to a topological relationship among the client, the edge node and the transit node, link data between the client and the accessed edge node, link data between the edge node and a connected transit node and link data between the transit nodes, wherein the client includes the originating client and the destination client.

In an embodiment, the device further includes:
A second determination module, configured to determine the transmission priority according to the service priority reported by the originating client;
A data transmission module, configured to send the transmission priority to the initiator client, so that the initiator client performs data transmission based on the multi-path transmission policy, the data transmission path, and the transmission priority.

Embodiments of the present disclosure also provide a computer readable storage medium. The computer readable storage medium stores a computer program, wherein the computer program is configured to execute the Steps in any one of the described method embodiments during running.

In an exemplary embodiment, the computer readable storage medium may include, but is not limited to, any medium that can store a computer program, such as a USB flash drive, a Read-Only Memory (ROM), a Random Access Memory (RAM), a removable hard disk, a magnetic disk, or an optical disc.

Embodiments of the present disclosure further provide an electronic device, including a memory and a processor. The memory stores a computer program. The processor is configured to run the computer program to execute Steps in any one of the method embodiments.

In an exemplary embodiment, the electronic device can further include a transmission device and an input/output device, wherein the transmission device is connected to the processor, and the input/output device is connected to the processor.

For specific embodiments in this embodiment, reference may be made to the embodiments described in the foregoing embodiments and exemplary embodiments, and details are not repeatedly described in this embodiment.

Obviously, those skilled in the art should understand that each module or each Step of the present disclosure can be implemented by a universal computing device, they may be centralized on a single computing device or distributed on a network composed of a plurality of computing devices, they can be implemented by program codes executable by a computing device, and thus can be stored in a storage device and executed by the computing device, Furthermore, in some cases, the shown or described Steps may be executed in an order different from that described here, or they are made into integrated circuit modules respectively, or a plurality of modules or Steps therein are made into a single integrated circuit module for implementation. As such, the present disclosure is not limited to any particular hardware and software combination.

The foregoing descriptions are merely exemplary embodiments of the present disclosure, but are not intended to limit the present disclosure. For those skilled in the art, the present disclosure may have various modifications and variations. Any modifications, equivalent replacements, improvements and the like made within the principle of the present disclosure shall fall within the scope of protection of the present disclosure.

## Claims

1. Data transmission processing method and device, storage medium, and electronic device, applied to a multipath control center, wherein the method comprises:
receiving transmission quality information and a network card state reported by a originating client;
obtaining a data transmission path between the originating client and a destination client, and obtaining an edge load of an edge node accessed by the originating client and the destination client;
determining a multipath transmission policy of the originating client according to the transmission quality information, the network card state, and the edge load; and
sending the multipath transmission policy and the data transmission path to the originating client, so that the originating client performs data transmission based on the multipath transmission policy and the data transmission path.

2. The method according to claim 1, wherein the determining a multipath transmission policy of the originating client according to the transmission quality information, the network card state, and the edge load comprises:
the multipath transmission policy comprises a multipath strategy and an edge access strategy for transmitting data, determining the multipath strategy according to the transmission quality information;
determining the edge access policy according to the network card state and the edge load.

3. The method according to claim 2, wherein the determining the multipath strategy according to the transmission quality information comprises:
determining transmission quality of the originating client according to the transmission quality information;
determining a level of the transmission quality; and
determining the multipath policy according to the level of the transmission quality.

4. The method according to claim 3, wherein the determining transmission quality of the originating client according to the transmission quality information comprises:
the transmission quality information comprises a packet loss rate, a latency, a jitter, a frame freeze rate, a screen distortion rate and/or a network card signal strength, normalizing the packet loss rate, the latency, the jitter, the frame freeze rate, the screen distortion rate and the network card signal strength;
comparing the packet loss rate, the latency, the jitter, the frame freeze rate, the screen distortion rate and/or the network card signal strength with a corresponding preset interval to obtain a comparison result; and
determining the transmission quality according to the comparison result and a trend of change of index.

5. The method according to claim 3, wherein the determining the multipath policy according to the level of the transmission quality comprises:
in a case where the transmission quality is of a first level, determining that the multipath policy is a single path mode;
in a case where the transmission quality is of a second level, determining that the multipath policy is a low cost redundancy mode;
in a case where the transmission quality is of a third level, determining that the multipath policy is a full redundancy mode;
wherein the multipath policy comprises the full redundancy mode, the low cost redundancy mode, and the single path mode, wherein in the full redundancy mode, all data is duplicated and transmitted on two paths; in the low cost redundancy mode, a part of data is transmitted on two paths; in the single path mode, all data is transmitted using one path; the transmission quality of the first level is greater than the transmission quality of the second level, and the transmission quality of the second level is greater than the transmission quality of the third level.

6. The method according to claim 2, wherein the determining the edge access policy according to the network card state and the edge load comprises:
the edge access policy comprises single edge access and multi edge access;
determining whether a number of physical network cards started on the originating client is one or multiple based on the network card state;
in a case where the starting number of the physical network card for the originating client is one and the edge load of the edge node accessed by the originating client meets a preset requirement, determining that the edge access policy is the single edge access;
in a case where the starting number of the physical network card of the originating client is one and the edge load of the edge node accessed by the originating client does not meet the preset requirement, determining that the edge access policy is the multi edge access;
in a case where the starting number of the physical network card of the originating client is multiple and the edge load of the edge node accessed by the originating client meets the preset requirement, determining that the edge access policy is the single edge access;
in a case where the starting number of the physical network card of the originating client is multiple and the edge load of the edge node accessed by the originating client does not meet the preset requirement, determining that the edge access policy is the single edge access.

7. The method according to claim 1, wherein the obtaining a data transmission path between the originating client and a destination client, and obtaining an edge load of an edge node accessed by the originating client and the destination client comprises:
obtaining the data transmission path between the originating client and the destination client that is synchronized by a routing dispatch center, and the edge load of the edge node accessed by the originating client and the destination client, wherein the data transmission path is obtained by the routing dispatch center by performing path planning according to a topological relationship among clients, edge nodes and transit nodes, link data between clients and accessed edge nodes, link data between the edge nodes and a connected nodes and link data between transit nodes, wherein the clients comprise the originating client and the destination client.

8. The method according to any one of claims 1 to 6, wherein the method further comprises:
determining a transmission priority according to a service priority reported by the originating client; and
sending the transmission priority to the originating client, so that the originating client performs data transmission based on the multi path transmission policy, the data transmission path, and the transmission priority.

9. A data transmission processing device, applied to a multipath control center. The device comprises:
a receiving module, configured to receive transmission quality information and a network card state reported by a originating client;
an acquisition module, configured to obtain a data transmission path between the originating client and a destination client, and obtaining an edge load of an edge node accessed by the originating client and the destination client;
a first determination module, configured to determine a multipath transmission policy of the originating client according to the transmission quality information, the network card state, and the edge load;
a sending module, configured to send the multipath transmission policy and the data transmission path to the originating client, so that the originating client performs data transmission based on the multipath transmission policy and the data transmission path.

10. A computer-readable storage medium, the storage medium stores a computer program, wherein the computer program is configured to execute the method according to any one of claims 1 to 8 when running.

11. An electronic device, comprising a memory and a processor, wherein the memory stores a computer program, and the processor is configured to run the computer program so as to execute the method according to any one of claims 1 to 8.
